# EUROPEAN PATENT SPECIFICATION

(11) **EP 4 368 452 B1**
(45) Date of publication and mention of the grant of the patent: **04.02.2026**
(21) Application number: 23207614.1
(22) Date of filing: 03.11.2023
(51) Int. Cl.: B60R 3/02

(54) **REMOVABLE STEP FOR A VEHICLE**
ABNEHMBARE TRITTSTUFE FÜR EIN FAHRZEUG
MARCHEPIED AMOVIBLE POUR VÉHICULE

(30) Priority: 09.11.2022 IT 202200023088
(43) Date of publication of application: 15.05.2024
(73) Proprietor: LCI Italy S.r.l., 50026 San Casciano in Val di Pesa (FI) (IT)
(72) Inventor: MARAGLIULO, Marco, Empoli (IT)
(74) Representative: Firmati, Leonardo

(56) References cited:
- EP-A1- 2 418 124
- WO-A1-03/039910
- CN-A- 114 435 249
- CN-U- 202 782 932
- CN-U- 204 222 754
- CN-U- 204 415 262

## Description

This invention relates to a removable step for a vehicle. More specifically, this invention relates to a removable step of the type which can be installed at an access door of a vehicle, for example a recreational vehicle, and which may adopt a retracted rest configuration and an extracted support configuration for a user who wishes to board or alight from the vehicle.

Currently, there are various types of removable steps for vehicles.

Prior art removable steps comprise a platform designed to pass automatically from a retracted position to an extracted position.

This platform in the prior art steps is moved by a motor or manually and is guided by a mechanism of arms and pins. Moreover, these prior art mechanisms comprise a locking element which during the passage to the extracted configuration comes into contact with a lateral surface of one of the above-mentioned arms in such a way as to allow the balancing of the weight in the presence of a user on the platform and the maintaining of the stable position of the platform.

Although the prior art steps provide a good solution to facilitate a user boarding and alighting from a predetermined vehicle, this solution is certainly not free of drawbacks.

A first major drawback of the prior art removable steps is due to the distribution of the load which is often excessive on the abutment element, implying problems relating to the stability of the structure as well as the wear of the locking element.

Another major drawback is due to the fact that the particular structure of prior art removable steps means that when the locking element is positioned in contact with the above-mentioned lateral surface of a predetermined arm, in the case of high loads the permanent deformation of these components due to Hertzian pressures has a significant affect on the variation in the position of the platform in the extracted position.

Moreover, even the relative slipping of the locking element on the lateral surface of the supporting arm tends to adversely affect the stability of the platform.

The document CN204222754U discloses a removable step for a vehicle according to the preamble of claim 1.

The aim of the invention is therefore to provide a removable step for a vehicle which is able to overcome the drawbacks of the prior art.

A further aim of this invention is to provide a removable step for a vehicle which is able to reduce the load on the locking element, thereby optimising the distribution of the load.

This allows the wear of the locking element to be limited, guaranteeing suitable operation for a longer period of time.

Another aim of this invention is to provide a removable step for a vehicle designed in such a way that the locking element can discharge the forces acting on it in such a way as to divide them equally at several points, limiting deformations of the structure and increasing the stability.

One of the aims of this invention is therefore to provide a removable step for a vehicle which is stable and functional.

Another aim of the invention is to provide a removable step which is simple and inexpensive to make.

According to the invention, these aims and others are achieved by a removable step for a vehicle comprising the technical features described in the accompanying claims.

The technical features of the invention, according to the above-mentioned aims, are clearly described in the appended claims and its advantages are apparent from the detailed description which follows, with reference to the accompanying drawings which illustrate a nonlimiting example embodiment of it, and in which:
- Figure 1 is a schematic exploded perspective side view from above of a removable step for a vehicle,
- Figure 2 is a schematic view from above of the step according to this invention in a retracted configuration of use,
- Figure 3 is a schematic front view of the step according to the particular retracted configuration of use illustrated in Figure 2,
- Figure 4 is a schematic side view according to the particular retracted configuration of use illustrated in Figure 2,
- Figure 5 is a schematic view from above of the step according to the invention in an extracted configuration of use,
- Figure 6 is a schematic front view according to the particular extracted configuration of use illustrated in Figure 5,
- Figure 7 is a schematic side view according to the particular extracted configuration of use illustrated in Figure 5.

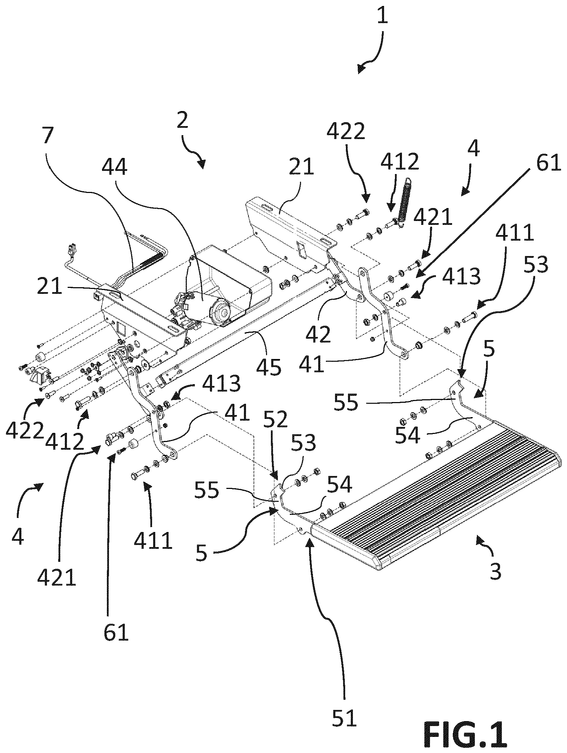

With reference to the Figure 1, the numeral 1 denotes in its entirety a removable step for a vehicle made in accordance with the invention, hereinafter also referred to simply as the step 1.

The step 1 according to the invention comprises a fixed portion 2 designed to stably connect to the vehicle.

In detail, the fixed portion 2 is advantageously positioned close to an entrance door of the vehicle.

The fixed portion 2 is stably connected to the vehicle by fixing means 21, for example by threaded connections or rivets.

The step 1 also comprises a movable platform 3.

The platform 3 is configured to provide a stable support to a user, in such a way as to allow the user to easily board and alight from the vehicle.

The step 1 according to this invention also comprises a lever 5 fixed with a first relative end 51 to the movable platform 3.

The lever 5 also comprises an abutment portion 53.

Advantageously, the lever 5 has a rectilinear portion 54 advantageously coplanar with the movable platform 3 and connected stably to the movable platform 3 along the above-mentioned first end 51 of the lever 5.

Advantageously, moreover, the lever 5 has a portion 55 extending substantially in the shape of an "L" from the rectilinear portion 54.

More in detail, the first end 51 is made on the rectilinear portion 54 and the second end 52 is made on the portion 55.

The step 1 also comprises connection and movement means 4 designed to connect the movable platform 3 with the fixed portion 2.

The connection and movement means 4 comprise a first arm 41.

The first arm 41 comprises a respective first rotation pin 411 designed to connect the first arm 41 with the lever 5.

More specifically, respective holes are made on the lever 5 and on the first arm 41 for inserting the first rotation pin 411 and for connecting the first arm 41 and lever 5.

The first rotation pin 411 therefore allows a reciprocal rotation of the lever 5 and of the first arm 41 about the first pin 411.

The first arm 41 also comprises a second rotation pin 412 designed to connect the first arm 41 to the fixed portion 2.

More in detail, the first arm 41 is designed to rotate relative to the fixed portion 2 by rotating about the second pin 412.

The first arm 41 also comprises a locking element 413.

Advantageously, the locking element 413 is defined by the head of a screw which is screwed onto the first arm 41.

The connection and movement means 4 also comprise a second arm 42.

The second arm 42 comprises a third rotation pin 421 designed to connect the second arm 42 with the lever 5. More specifically, respective holes are made on the lever 5 and on the second arm 42 for inserting the third rotation pin 421 and for connecting the second arm 42 and the lever 5 .

The third rotation pin 421 therefore allows a reciprocal rotation of the lever 5 and of the second arm 42 about the third pin 421.

The second arm 42 also comprises a fourth rotation pin 422 designed to connect the second arm 42 with the fixed portion 2.

More in detail, the second arm 42 is designed to rotate relative to the fixed portion 2 by rotating about the fourth pin 422.

Advantageously, the first rotation pin 411 is positioned on the rectilinear portion 54, and the third rotation pin is positioned on the portion 55 having an "L"-shaped extension of the lever 5.

More specifically, when the step 1 is in the assembled configuration, the first rotation pin 411 is designed to be positioned stably in such a way as to pass through the first arm 41 and the rectilinear portion 54 of the lever 5, and the third rotation pin 421 is designed to be positioned stably in such a way as to pass through the second arm 42 and the portion 55 extending from the rectilinear portion 54.

Advantageously, the portion 55 extends in a substantially curvilinear fashion.

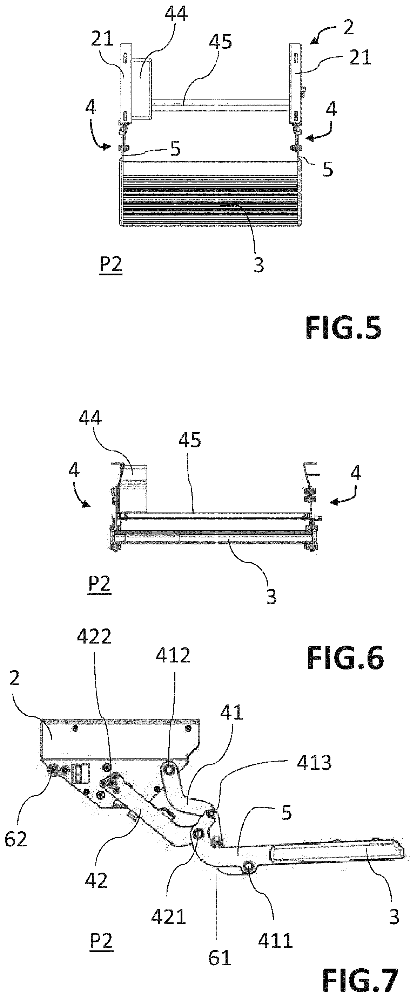

More in detail, with reference to Figure 7, when the movable platform 3 is positioned in an extracted position P2 (described below), starting from the first end 51 until reaching the second end 52 the first pin 411, the third pin 421 and the locking element 413 are positioned in sequence along a curved direction.

Substantially, the positioning of the third pin 421 between the first pin 411 and the abutment portion 53 makes it possible to optimise the loads on the locking element 413.

The connection and movement means 4 comprise an electric motor 44 positioned close to and, advantageously, fixed to the fixed portion 2.

In the embodiment illustrated in the accompanying drawings, the electric motor 44 is designed to rotate the second arm 42 about the fourth rotation pin 422.

The movement of the second arm 42 is sufficient to actuate the connection and movement means 4 and thus move the movable platform 3 from the position P1 to the position P2 and vice versa.

According to another embodiment, not illustrated in the drawings, the electric motor 44 is designed to actuate the first arm 41.

In a further embodiment, not illustrated, the connection and movement means 4 are moved manually.

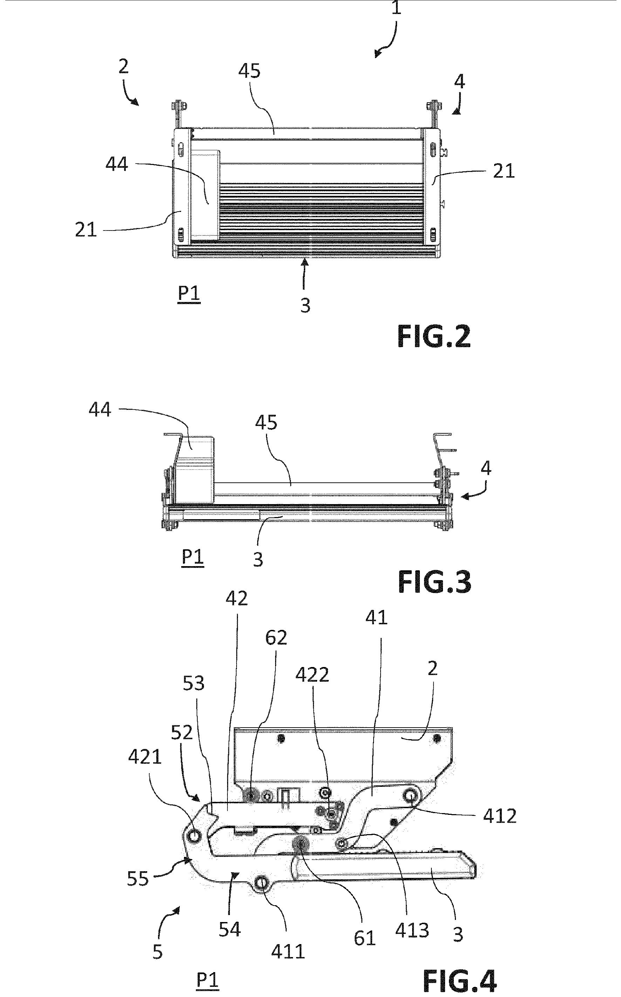

The connection and movement means 4 are designed to move the movable platform 3 from a retracted position P1 (Figures 2 to 4) to an extracted position P2 (Figures 5 to 7) wherein the abutment portion 53 of the lever 5 is positioned in contact with the locking element 413 of the first arm 41.

The abutment portion 53 is positioned on a second end 52 of the lever 5.

The second end 52 is distal from the first end 51 of the lever 5 connected to the movable platform 3.

The abutment portion 53 forms an extension relative to the third pin 421.

That structure, that is to say, wherein the abutment portion 53 protrudes from the pin 421 towards the locking element 413 (for example when the platform 3 is in position P2), makes it possible to optimise the discharge of the forces acting on the platform 3.

This also makes it possible to optimise the resistance to wear of the platform and guarantees adequate performance for long periods of time.

Advantageously, the abutment portion 53 is "V"-shaped and the locking element 413 has a circular cross section. The combination of the "V" shape and the circular cross section allows the distribution of loads to be further optimised when the abutment portion 53 is in contact with the locking element 413, that is to say, when the movable platform 3 is in position P2. This is because the contact on two points of the "V" is ensured and, therefore, an optimised distribution of the load on it. Moreover, the particular "V" shape of the abutment portion 53 makes it possible to stabilise the position of contact with the locking element 413, preventing the slipping of the locking element 413 from varying the position of the platform 3 under load.

Advantageously, the step 1 according to this invention comprises a first elastic element 61 with a soundproofing function positioned on the first arm 41 and designed to engage in contact with the portion 55 extending substantially in the shape of an "L" of the lever 5, that is to say, when the movable platform 3 is in the extracted position P2.

The first elastic element 61 makes the final passage between position P1 and position P2 more fluid, reducing the intensity of impact of the abutment end 53 with the locking element 413.

Advantageously, moreover, the step 1 comprises a second elastic soundproofing element 62 positioned close to the fixed portion 2 and designed to attenuate the impact of the connection and movement means 4 on the fixed portion 2 when the platform passes from the extracted position P2 to the retracted position P1.

The step 1 also comprises means 7 for powering the electric motor 44.

In the embodiment illustrated in the accompanying drawings, the connection and movement means 4 extend on a first and a second branch specular relative to a plane transversal to the movable platform 3.

In other words, the connection and movement means 4 are positioned between the movable platform 3 and the fixed portion 2 and comprise the first arm 41, the second arm 42 and the lever 5, according to the embodiment illustrated in the accompanying drawings, and are symmetrical on both the above-mentioned first and second branches.

In a further embodiment, the connection and movement means 4 and the lever 5 extend along a single branch. In this embodiment, not illustrated in the drawings, the means 4 are advantageously positioned close to a central portion of the movable platform 3 for a more equal distribution of the loads on the step 1.

Advantageously, the first and the second branch of the means 4 are connected by a crosspiece 45 designed to rigidly connect the second arm 42 of the first branch with the second arm 42 of the second branch.

As stated above, in the embodiment illustrated in the accompanying drawings, the electric motor 44 is operatively connected to a single second arm 42 of a single branch.

The crosspiece 45 allows the motion to be transmitted from first to second branch or vice versa in a specular fashion.

The removable step 1 for a vehicle according to this invention overcomes the above-mentioned drawbacks and brings important advantages.

A first important advantage of the removable step 1 for a vehicle is due to the fact that it guarantees to a user a stable support and such as to minimise bending of the platform 3.

In effect, the structure of the step 1, with particular reference to the positioning of the abutment portion 53 relative to the lever 5 on which it is made and to the shape of the abutment portion 53 in combination with the shape of the locking element 413, allow the pressure on the locking element 413 to be reduced and in general to optimise the distribution of the load, with consequent significant advantages in optimising the stability of the step 1.

Another important advantage deriving from the particular structure of the step 1 is due to the fact that it limits the wear of the element 413 in such a way as to optimise reliability and safety of the step 1.

## Claims

1. A removable step (1) for a vehicle, comprising:
- a fixed portion (2) designed to stably connect to said vehicle,
- a movable platform (3),
- a lever (5) fastened with a first end (51) to said movable platform (3) and comprising a abutment portion (53),
- connection and movement means (4) designed to connect said movable platform (3) with said fixed portion (2), said means (4) comprising:
- a first arm (41) comprising a respective first rotation pin (411) designed to connect said first arm (41) with said lever (5), a second rotation pin (412) designed to connect said first arm (41) to said fixed portion (2), said first arm (41) comprising a locking element (413),
- a second arm (42) comprising a third rotation pin (421) designed to connect said second arm (42) with said lever (5), a fourth rotation pin (422) designed to connect said second arm (42) to said fixed portion (2),
said connection and movement means (4) also being designed to move said movable platform (3) from a retracted position (P1) to an extracted position (P2) wherein said abutment portion (53) of said lever (5) is in contact with said locking element (413) of said first arm (41),
said abutment portion (53) being positioned on a second end (52) of said lever (5), said second end (52) being distal from said first end (51) of said lever (5), said step (1) being **characterised in that** said abutment portion (53) forms an extension of the lever (5) relative to said third pin (421) location.

2. The step (1) according to the preceding claim, **characterised in that**, when said platform is positioned in said position (P2), starting from said end (51) until reaching said second end (52) they are positioned in sequence along a direction of extension of said lever (5), said pin (411), said third pin (421) and said locking element (413).

3. The step (1) according to any one of the preceding claims, **characterised in that** said lever (5) comprises:
- a rectilinear portion (54) substantially coplanar with said platform (3) and connected to said platform (3) on said first end (51) of said lever (5),
- a portion (55) extending substantially in an "L" shape from said rectilinear portion (54).

4. The step (1) according to the preceding claim, **characterised in that** said first rotation pin (411) is positioned on said rectilinear portion (54), and said third rotation pin (421) is positioned on said portion (55).

5. The step (1) according to claim 1, **characterised in that** said abutment end (53) is "V"-shaped, **and in that** said locking element (413) has a circular cross section.

6. The step (1) according to any one of the preceding claims, **characterised in that** it comprises a first elastic soundproofing element (61) positioned on said first arm (41) and designed to engage in contact with said portion (55) extending substantially in the shape of an "L" of said lever (5), when said platform (3) is in position (P2).

7. The step (1) according to any one of the preceding claims, **characterised in that** said connection and movement means (4) comprise an electric motor (44) positioned close to said fixed portion (2).

8. The step (1) according to the preceding claim, **characterised in that** it comprises means (7) for powering said electric motor (44).

9. The step (1) according to any one of the preceding claims, **characterised in that** the connection and movement means (4) extend on a first and a second branch specular relative to a plane transversal to said platform (3).

10. The step (1) according to the preceding claim, **characterised in that** said first and second branches are connected by a crosspiece (45) designed to rigidly connect said second arm (42) of said first branch with said second arm (42) of said second branch.

11. The step (1) according to any one of claims 1 to 7, **characterised in that** said connection and movement means (4) extend on a single branch.

## Patentansprüche

1. Abnehmbare Trittstufe (1) für ein Fahrzeug, umfassend:
- einen festen Abschnitt (2), der ausgestaltet ist, um stabil mit dem Fahrzeug verbunden zu werden,
- eine bewegbare Plattform (3),
- einen Hebel (5), der mit einem ersten Ende (51) an der bewegbaren Plattform (3) befestigt ist und einen Anschlagsabschnitt (53) umfasst,
- Verbindungs- und Bewegungsmittel (4), die ausgestaltet sind, um die bewegbare Plattform (3) mit dem festen Abschnitt (2) zu verbinden, wobei die Mittel (4) Folgendes umfassen:
- einen ersten Arm (41), der einen jeweiligen ersten Drehzapfen (411) umfasst, der ausgestaltet ist, um den ersten Arm (41) mit dem Hebel (5) zu verbinden, und einen zweiten Drehzapfen (412), der ausgestaltet ist, um den ersten Arm (41) mit dem festen Abschnitt (2) zu verbinden, wobei der erste Arm (41) ein Verriegelungselement (413) umfasst,
- einen zweiten Arm (42), der einen dritten Drehzapfen (421) umfasst, der ausgestaltet ist, um den zweiten Arm (42) mit dem Hebel (5) zu verbinden, und einen vierten Drehzapfen (422), der ausgestaltet ist, um den zweiten Arm (42) mit dem festen Abschnitt (2) zu verbinden,
wobei die Verbindungs- und Bewegungsmittel (4) ebenfalls ausgestaltet sind, um die bewegbare Plattform (3) von einer eingeklappten Position (P1) in eine ausgeklappte Position (P2), in der der Anschlagsabschnitt (53) des Hebels (5) mit dem Verriegelungselement (413) des ersten Arms (41) in Kontakt ist, zu bewegen,
wobei der Anschlagsabschnitt (53) auf einem zweiten Ende (52) des Hebels (5) positioniert ist, wobei das zweite Ende (52) vom ersten Ende (51) des Hebels (5) entfernt ist, wobei die Trittstufe (1) **dadurch gekennzeichnet ist, dass** der Anschlagsabschnitt (53) eine Ausdehnung des Hebels (5) relativ zur Position des dritten Zapfens (421) bildet.

2. Trittstufe (1) nach dem vorhergehenden Anspruch, **dadurch gekennzeichnet, dass** der Zapfen (411), der dritte Zapfen (421) und das Verriegelungselement (413) ausgehend vom ersten Ende (51) bis zum Erreichen des zweiten Endes (52) nacheinander entlang einer Ausdehnungsrichtung des Hebels (5) positioniert sind, wenn die Plattform in der Position (P2) positioniert ist.

3. Trittstufe (1) nach einem der vorhergehenden Ansprüche, **dadurch gekennzeichnet, dass** der Hebel (5) Folgendes umfasst:
- einen gradlinigen Abschnitt (54), der im Wesentlichen koplanar mit der Plattform (3) ist und mit der Plattform (3) auf dem ersten Ende (51) des Hebels (5) verbunden ist,
- einen Abschnitt (55), der sich im Wesentlichen in einer "L"-Form von dem geradlinigen Abschnitt (54) erstreckt.

4. Trittstufe (1) nach dem vorhergehenden Anspruch, **dadurch gekennzeichnet, dass** der erste Drehzapfen (411) auf dem geradlinigen Abschnitt (54) positioniert ist und der dritte Drehzapfen (421) auf dem Abschnitt (55) positioniert ist.

5. Trittstufe (1) nach Anspruch 1, **dadurch gekennzeichnet, dass** das Anschlagsende (53) "V"-förmig ist und dass das Verriegelungselement (413) einen kreisförmigen Querschnitt aufweist.

6. Trittstufe (1) nach einem der vorhergehenden Ansprüche, **dadurch gekennzeichnet, dass** sie ein erstes elastisches Schalldämmelement (61) umfasst, das auf dem ersten Arm (41) positioniert und ausgestaltet ist, um in Kontakt mit dem Abschnitt (55) in Eingriff zu gelangen, sich erstreckend im Wesentlichen in der Form eines "Ls" des Hebels (5), wenn sich die Plattform (3) in Position (P2) befindet.

7. Trittstufe (1) nach einem der vorhergehenden Ansprüche, **dadurch gekennzeichnet, dass** die Verbindungs- und Bewegungsmittel (4) einen elektrischen Motor (44) umfassen, der nah am festen Abschnitt (2) positioniert ist.

8. Trittstufe (1) nach dem vorhergehenden Anspruch, **dadurch gekennzeichnet, dass** sie Mittel (7) zum Versorgen des elektrischen Motors (44) umfasst.

9. Trittstufe (1) nach einem der vorhergehenden Ansprüche, **dadurch gekennzeichnet, dass** sich die Verbindungs- und Bewegungsmittel (4) auf einem ersten und einem zweiten Abzweig spiegelbildlich relativ zu einer Ebene quer zur Plattform (3) erstrecken.

10. Trittstufe (1) nach dem vorhergehenden Anspruch, **dadurch gekennzeichnet, dass** der erste und der zweite Abzweig durch ein Kreuzstück (45) verbunden sind, das ausgestaltet ist, um den zweiten Arm (42) des ersten Abzweigs mit dem zweiten Arm (42) des zweiten Abzweigs zu verbinden.

11. Trittstufe (1) nach einem der Ansprüche 1 bis 7, **dadurch gekennzeichnet, dass** sich die Verbindungs- und Bewegungsmittel (4) auf einem einzelnen Abzweig erstrecken.

## Revendications

1. Marchepied (1) amovible pour un véhicule, comprenant :
- une portion fixe (2) conçue pour se relier de manière stable audit véhicule,
- une plate-forme mobile (3),
- un levier (5) fixé avec une première extrémité (51) à ladite plate-forme mobile (3) et comprenant une portion de butée (53),
- des moyens de liaison et de déplacement (4) conçus pour relier ladite plate-forme mobile (3) à ladite portion fixe (2), lesdits moyens (4) comprenant :
- un premier bras (41) comprenant un premier axe de rotation (411) respectif conçu pour relier ledit premier bras (41) audit levier (5), un second axe de rotation (412) conçu pour relier ledit premier bras (41) à ladite portion fixe (2), ledit premier bras (41) comprenant un élément de verrouillage (413),
- un second bras (42) comprenant un troisième axe de rotation (421) conçu pour relier ledit second bras (42) audit levier (5), un quatrième axe de rotation (422) conçu pour relier ledit second bras (42) à ladite portion fixe (2),
lesdits moyens de liaison et de déplacement (4) étant également conçus pour déplacer ladite plate-forme mobile (3) d'une position rétractée (P1) à une position extraite (P2) dans laquelle ladite portion de butée (53) dudit levier (5) est en contact avec ledit élément de verrouillage (413) dudit premier bras (41),
ladite portion de butée (53) étant positionnée sur une seconde extrémité (52) dudit levier (5), ladite seconde extrémité (52) étant distale de ladite première extrémité (51) dudit levier (5), ledit marchepied (1) étant **caractérisé en ce que** ladite portion de butée (53) forme une extension du levier (5) par rapport audit emplacement du troisième axe (421).

2. Marchepied (1) selon la revendication précédente, **caractérisé en ce que**, lorsque ladite plate-forme est positionnée dans ladite position (P2), à partir de ladite extrémité (51) jusqu'à atteindre ladite seconde extrémité (52), elles sont positionnées en séquence le long d'une direction d'extension dudit levier (5), dudit axe (411), dudit troisième axe (421) et dudit élément de verrouillage (413).

3. Marchepied (1) selon l'une quelconque des revendications précédentes, **caractérisé en ce que** ledit levier (5) comprend :
- une portion rectiligne (54) substantiellement coplanaire avec ladite plate-forme (3) et reliée à ladite plate-forme (3) sur ladite première extrémité (51) dudit levier (5),
- une portion (55) s'étendant substantiellement en forme de « L » à partir de ladite portion rectiligne (54).

4. Marchepied (1) selon la revendication précédente, **caractérisé en ce que** ledit premier axe de rotation (411) est positionné sur ladite portion rectiligne (54), et ledit troisième axe de rotation (421) est positionné sur ladite portion (55).

5. Marchepied (1) selon la revendication 1, **caractérisé en ce que** ladite extrémité de butée (53) est en forme de « V », et **en ce que** ledit élément de verrouillage (413) a une section transversale circulaire.

6. Marchepied (1) selon l'une quelconque des revendications précédentes, **caractérisé en ce qu'**il comprend un premier élément d'insonorisation élastique (61) positionné sur ledit premier bras (41) et conçu pour venir en contact avec ladite portion (55) s'étendant substantiellement en forme de « L » dudit levier (5), lorsque ladite plate-forme (3) est en position (P2).

7. Marchepied (1) selon l'une quelconque des revendications précédentes, **caractérisé en ce que** lesdits moyens de liaison et de déplacement (4) comprennent un moteur électrique (44) positionné à proximité de ladite portion fixe (2).

8. Marchepied (1) selon la revendication précédente, **caractérisé en ce qu'**il comprend des moyens (7) pour alimenter ledit moteur électrique (44).

9. Marchepied (1) selon l'une quelconque des revendications précédentes, **caractérisé en ce que** les moyens de liaison et de déplacement (4) s'étendent sur une première et une seconde branche spéculaire par rapport à un plan transversal à ladite plate-forme (3).

10. Marchepied (1) selon la revendication précédente, **caractérisé en ce que** lesdites première et seconde branches sont reliées par une traverse (45) conçue pour relier de manière rigide ledit second bras (42) de ladite première branche audit second bras (42) de ladite seconde branche.

11. Marchepied (1) selon l'une quelconque des revendications 1 à 7, **caractérisé en ce que** lesdits moyens de liaison et de déplacement (4) s'étendent sur une seule branche.
